# EUROPEAN PATENT APPLICATION

(11) **EP 4 167 172 A1**
(43) Date of publication of application: **19.04.2023**
(21) Application number: 22201339.3
(22) Date of filing: 13.10.2022
(51) Int. Cl.: G06Q 40/04

(54) **DIAMOND TRADING PLATFORM**

(30) Priority: 14.10.2021 TW 110138072
(71) Applicant: Ming Ta Boutique Design Co., Ltd., 110 Taipei City (TW)
(72) Inventor: CHEN, Chun-Pin, 110 Taipei City (TW); CHEN, Kuang-Yuan, 110 Taipei City (TW)
(74) Representative: Murgitroyd & Company

(57) **Abstract**

The invention discloses a diamond trading platform (100), comprising: a diamond information archiving unit (1), a diamond reference price calculation unit (2), a market estimation price calculation unit (3) and a distribution result display unit (4). The diamond information archiving unit (1) is connected to the diamond reference price calculation unit (2), the market estimation price calculation unit (3) obtains designated sales market maximum diamond estimation price information and designated sales market minimum diamond estimation price information by the diamond information archiving unit (1) and the diamond reference price calculation unit (2). The distribution result display unit (4) is connected to the market estimation price calculation unit (3) to display the designated sales market maximum diamond estimation price information and the designated sales market minimum diamond estimation price information.

## Description

### FIELD OF THE INVENTION

The present invention relates to a diamond trading platform, and more particularly relates to a diamond trading platform that determines highest diamond price and lowest diamond price for each country according to economic strength of this country.

### BACKGROUND OF THE INVENTION

A conventional gem trading platform is simple, which performs trade matching by only considers properties of each gem. For example, trading rules of the conventional diamond trading platform only focuses on: setting the sales price based on the quality of diamonds; and trade matching between the buyer and the seller based on the buyer bid information and the seller sales price information. If the pricing and the price matching is performed only based on the quality of diamond without considering consumers' diamonds spending power in each country or area, exchange rate flexibility, historical sales records, it will cause the situation that either the diamonds price is too high to attract consumers' interests, or the diamonds price is too low that its profits is lost.

As mentioned above, for each selling country, the factors including the consumers' spending power, the exchange rate flexibility, the selling locations and the historical sales records are closed relative to each other and vary time to time. However, the above factors can be used as important references to prevent the diamonds price from being set too high or too low. For example, when the customers' diamonds spending power in one country increases, the exchange rate generally increases such that the historical sales records of diamonds under this exchange rate could be taken as a reference to determine whether the price for some specific high quality of diamond could be raised up. On contrary, when the spending power of the customers in one country decreases, the exchange rate generally decreases such that the historical sales records of diamonds under this exchange rate could be taken as a reference to determine whether the price for some lower quality of diamond should be lowered. That is to say the factors mentioned above can be used as important diamonds selling references for every selling market. Especially, for international diamonds markets where a large scale of supply and demand for enormous quantities of diamonds should be considered, if the factors mentioned above can be taken into consideration to perform automated distribution right after the calculation regarding the factors, the selling benefit can be increased and the transaction risk can be greatly reduced. As a result, the above could prevent diamonds in different quality levels and different qualities from being sold in wrong countries where draggy sales happens, price raising up due to unnecessary diamonds transportation and storage cost. The above could also enhance a diamond price.

### SUMMARY OF THE INVENTION

Therefore, one objective of the present invention is to provide a diamond trading platform which sets a reasonable and appropriate sales price for different grades diamonds and different qualities diamonds according to the spending power of the consumers of the sales market, the market price fluctuations and the historical sales price information such that the diamonds sales are increased, thereby increasing the sales amount, reducing the transaction risk, avoiding the diamonds draggy sales, and avoiding the unnecessary diamonds transportation and storage cost.

In order to achieve the above objective, the present invention provides a diamond trading platform, comprising: a diamond information archiving unit having a database, the database storing diamond information, basic price information regarding diamond in different grades and qualities, designated sales market information regarding a designated sales market, designated sales market per capita gross product income information in relation to the designated sales market information, designated sales market relative exchange rate information, and historical maximum sales price information and historical minimum sales price information in the designated sales market in relation to each diamond information, wherein the designated sales market relative exchange rate information is a relative exchange rate of a diamond export area to the designated sales market; a diamond reference price calculation unit connected to the diamond information archiving unit, wherein the diamond reference price calculation unit obtains reference price information in relation to the diamond information according to the basic price information and weight information of a diamond; a market estimation price calculation unit connected to the diamond information archiving unit and the diamond reference price calculation unit, wherein the market estimation price calculation unit obtains designated sales market maximum diamond estimation price information and designated sales market minimum diamond estimation price information according to the reference price information, the designated sales market per capita gross product income information, the designated sales market relative exchange rate information, the historical maximum sales price information and the historical minimum sales price information, and the market estimation price calculation unit regularly and/or irregularly sending the designated sales market maximum diamond estimation price information and the designated sales market minimum diamond estimation price information to the diamond information archiving unit to store; and a distribution result display unit connected to the market estimation price calculation unit to display the designated sales market maximum diamond estimation price information and the designated sales market minimum diamond estimation price information regarding the designated sales market.

In one embodiment of the present invention, a diamond trading platform is provided that the diamond information archiving unit regularly or irregularly updates the historical maximum sales price information and the historical minimum sales price information according to the designated sales market maximum diamond estimation price information and the designated sales market minimum diamond estimation price information sent by the market estimation price calculation unit.

In one embodiment of the present invention, a diamond trading platform is provided that the diamond trading platform is aimed to physics unique properties of diamonds, the designated sales market relative exchange rate information is a purchasing power parity exchange rate of the diamond export area to the designated sales market.

In one embodiment of the present invention, a diamond trading platform is provided that the diamond trading platform is aimed to physics unique properties of diamonds, the diamond information comprises: a color and a clarity of the diamond, the basic price information regarding the color and the clarity of the diamond.

In one embodiment of the present invention, a diamond trading platform is provided that the diamond trading platform is aimed to physics unique properties of diamonds, the diamond information comprises: a color tone of the diamond matching color shades, the basic price information regarding the color and the color tone of the diamond.

In one embodiment of the present invention, a diamond trading platform is provided that the diamond trading platform is aimed to physics unique properties of diamonds, the diamond information comprises: a cutting form, the cutting form being round or fancy.

In one embodiment of the present invention, a diamond trading platform is provided that the diamond trading platform is aimed to physics unique properties of diamonds, the diamond information comprises: a polishing degree of the diamond.

In one embodiment of the present invention, a diamond trading platform is provided that the diamond trading platform is aimed to physics unique properties of diamonds, the diamond information comprises: a degree of symmetry of the diamond.

In one embodiment of the present invention, a diamond trading platform is provided that the diamond trading platform is aimed to physics unique properties of diamonds, the diamond information comprises: a culet situation of the diamond.

In one embodiment of the present invention, a diamond trading platform is provided that the diamond trading platform is aimed to physics unique properties of diamonds, the diamond information comprises: a fluorescence reaction of the diamond.

In one embodiment of the present invention, a diamond trading platform is provided that the diamond trading platform is aimed to physics unique properties of diamonds, the diamond information comprises: a color degree category of the diamond and a picture of the diamond.

In one embodiment of the present invention, a diamond trading platform is provided that the diamond information comprises: information, which could facilitate the customer to obtain maximizing transactions and minimizing losses, in countries including a presently existing country having sovereignty and a record of diamond trade and a country belonging to a member of Kimberley process such that a customer uses the diamond information to input a region of a country desired for diamond trade.

The diamond trading platform of the present invention has the technical effects as follows. The factors including the spending power of the customers of the diamonds selling areas, the exchange rate and the historical sales records are used as important references for the diamonds selling such that the sales amount can be increased and the transaction risk can be decreased to avoid the diamonds draggy sales and avoid the unnecessary diamonds transportation and storage cost. Moreover, the designated sales market maximum diamond estimation price information and the designated sales market minimum diamond estimation price information could be obtained to provide a suggestion relating to the designated sales market and the reasonable diamonds sales price to the diamonds seller.

### BRIEF DESCRIPTION OF THE DRAWINGS

Fig. 1 is a block schematic diagram illustrating a diamond trading platform according to one embodiment of the present invention;
Fig. 2 is an implementation sequence schematic diagram of the diamond trading platform according to one embodiment of the present invention;
Fig. 3 is a schematic diagram illustrating a distribution result display unit of the diamond trading platform according to one embodiment of the present invention;
Fig. 4 is a schematic diagram illustrating basic price information in the diamond trading platform according to one embodiment of the present invention;
Fig. 5 is a schematic diagram illustrating basic price information in the diamond trading platform according to one embodiment of the present invention;
Fig. 6 is a schematic diagram illustrating the designated sales market per capita gross product income information and the designated sales market relative exchange rate information at various times in the diamond trading platform according to one embodiment of the present invention;
Fig. 7 is a schematic diagram illustrating the historical maximum sales price information and the historical minimum sales price information in relation to the designated sales market per capita gross product income information at a specific time and the designated sales market relative exchange rate information at various times in the diamond trading platform according to one embodiment of the present invention; and
Fig. 8 is a schematic diagram illustrating the historical maximum sales price information and the historical minimum sales price information in relation to the designated sales market per capita gross product income information at another specific time and the designated sales market relative exchange rate information at various times in the diamond trading platform according to one embodiment of the present invention.

### DETAILED DESCRIPTION OF THE PREFERRED EMBODIMENTS

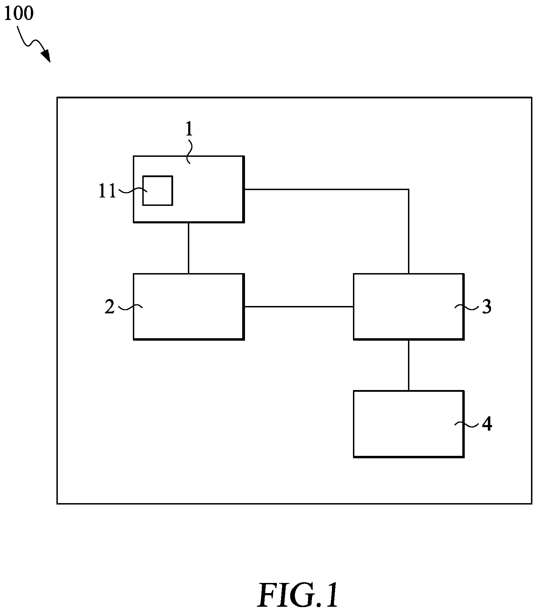

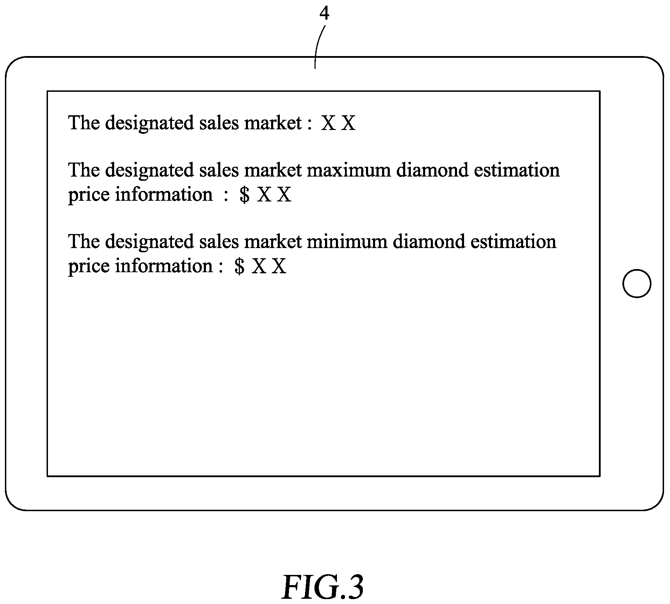

The preferred embodiments of the present invention are described in detail with reference to Figs. 1 to 5. The description is used for explaining the embodiments of the present invention only, but not for limiting the scope of the claims.

As shown in Figs. 1 to 3, in one embodiment of the present invention, a diamond trading platform 100 includes: a diamond information archiving unit 1, a diamond reference price calculation unit 2, a market estimation price calculation unit 3 and a distribution result display unit 4. The diamond trading platform 100 of the embodiment of the present invention can set a reasonable sales price for diamonds according to related information of designated sales markets to increase the diamonds sales of the designated sales markets.

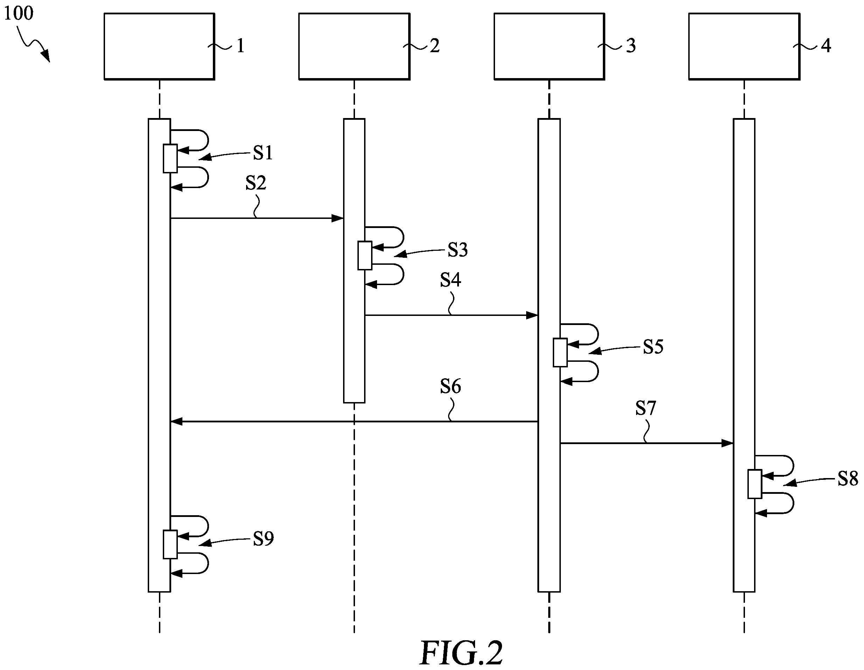

As shown in Figs. 1 and 2, the diamond information archiving unit 1 has a database 11. The database 11 stores diamond information, basic price information regarding diamond in different grades and qualities, designated sales market information regarding a designated sales market, designated sales market per capita gross product income information in relation to the designated sales market information, designated sales market relative exchange rate information, and historical maximum sales price information and historical minimum sales price information in the designated sales market in relation to each diamond information. In an implementing sequence S1, a user inputs the related information mentioned above, such as the diamond information and the designated sales market information, into the diamond information archiving unit 1. Specifically, the designated sales market relative exchange rate information is a relative exchange rate of a diamond export area to the designated sales market.

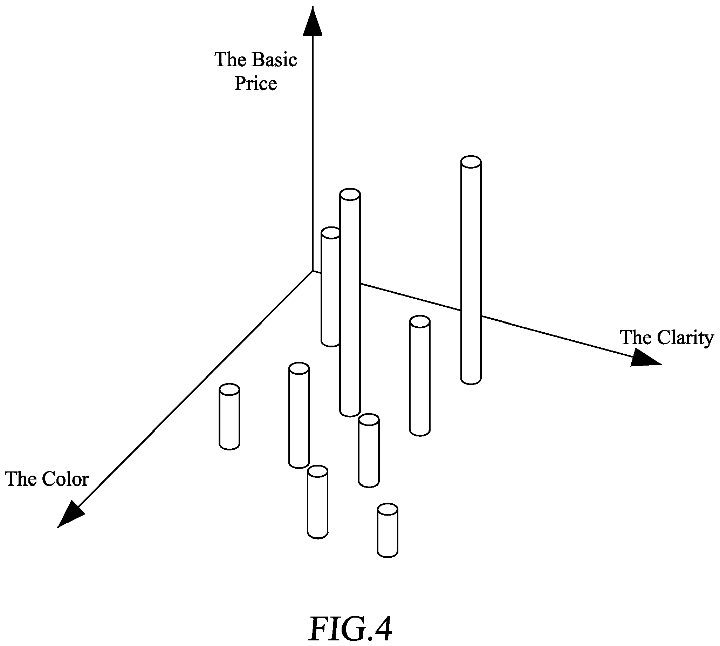

As shown in Figs. 1 and 4, in the diamond trading platform 100 according to one embodiment of the present invention, the diamond information includes: a color and a clarity of the diamond, and the basic price information is related to the color and the clarity of the diamond. For example, as disclosed in the table below, taking a round cut diamond as an example, when the color of the diamond is "D" and the clarity is "IF", the corresponding basic price information is "R1"; and when the color of the diamond is "F" and the clarity is "VVS1", the corresponding basic price information is "R12". In the embodiment disclosed in the present invention, after rough diamonds are sorted and selected, the rough diamonds are classified by grades according to the color and the clarity, and the basic price information is denominated in USD.

| color\clarity | IF | VVS1 | VVS2 | VS1 | VS2 |
|---|---|---|---|---|---|
| D | R1 | R2 | R3 | R4 | R5 |
| E | R6 | R7 | R8 | R9 | R10 |
| F | R11 | R12 | R13 | R14 | R15 |
| G | R16 | R17 | R18 | R19 | R20 |
| H | R21 | R22 | R23 | R24 | R25 |

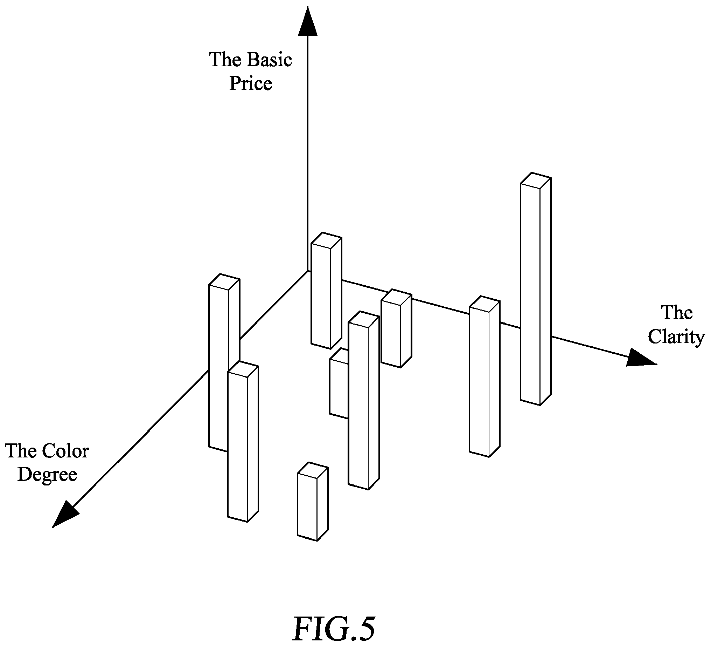

As shown in Figs. 1 and 5, in the diamond trading platform 100 according to one embodiment of the present invention, the diamond information includes: a color and a clarity of the diamond; in addition, color diamonds are classified by shades of color and color degree, and the basic price information of the diamonds is related to the color degree and the clarity of the diamonds. For example, taking a round cut diamond as an example, when the color degree of the color diamond is "Fancy Vivid" and the clarity is "IF", the corresponding basic price information is "R21"; and when the color degree of the color diamond is "Fancy Deep" and the clarity is "VVS1", the corresponding basic price information is "R212". Likewise, in the present invention, the basic price information is denominated in USD.

| color degree\clarity | IF | VVS1 | VVS2 | VS1 | VS2 |
|---|---|---|---|---|---|
| Fancy Vivid | R21 | R22 | R23 | R24 | R25 |
| Fancy Intense | R26 | R27 | R28 | R29 | R210 |
| Fancy Deep | R211 | R212 | R213 | R214 | R215 |
| Fancy Dark | R216 | R217 | R218 | R219 | R220 |
| Fancy | R221 | R222 | R223 | R224 | R225 |

In one embodiment of the present invention, the diamond trading platform 100 is provided that the diamond information comprises: a cutting form, and the cutting form is round or fancy. Furthermore, the cutting form of the diamonds can be classified into four grades: "Idea", "Excellent", "Very Good" and "Good".

For example, as disclosed in the table below, taking a fancy cut diamond as an example, when the color of the diamond is "E" and the clarity is "VS1", the corresponding basic price information is "R39"; and when the color of the diamond is "H" and the clarity is "VS2", the corresponding basic price information is "R39". Likewise, in the present invention, the basic price information is denominated in USD.

| color\clarity | IF | VVS1 | VVS2 | VS1 | VS2 |
|---|---|---|---|---|---|
| D | R31 | R32 | R33 | R34 | R35 |
| E | R36 | R37 | R38 | R39 | R310 |
| F | R311 | R312 | R313 | R314 | R315 |
| G | R316 | R317 | R318 | R319 | R320 |
| H | R321 | R322 | R323 | R324 | R325 |

Moreover, as disclosed in the table below, taking a fancy color diamond as an example, when the color degree of the color diamond is "Fancy Intense" and the clarity is "VVS1", the corresponding basic price information is "R47"; and when the color degree of the color diamond is "Fancy" and the clarity is "VVS2", the corresponding basic price information is "R423". Likewise, in the present invention, the basic price information is denominated in USD.

| color degree\clarity | IF | VVS1 | VVS2 | VS1 | VS2 |
|---|---|---|---|---|---|
| Fancy Vivid | R41 | R42 | R43 | R44 | R45 |
| Fancy Intense | R46 | R47 | R48 | R49 | R410 |
| Fancy Deep | R411 | R412 | R413 | R414 | R415 |
| Fancy Dark | R416 | R417 | R418 | R419 | R420 |
| Fancy | R421 | R422 | R423 | R424 | R425 |

In one embodiment of the present invention, the diamond trading platform 100 is provided that the diamond information comprises: a polishing degree of the diamond. Likewise, the polishing degree of the diamonds can be classified into four grades: "Idea", "Excellent", "Very Good" and "Good".

In one embodiment of the present invention, the diamond trading platform 100 is provided that the diamond information comprises: a degree of symmetry of the diamond. Likewise, the polishing degree of the diamonds can be classified into four grades: "Idea", "Excellent", "Very Good" and "Good".

In one embodiment of the present invention, the diamond trading platform 100 is provided that the diamond information comprises: a culet situation of the diamond. Specifically, the culet situation of the diamond can be divided into "None" and "NO None".

In one embodiment of the present invention, the diamond trading platform 100 is provided that the diamond information comprises: a fluorescence reaction of the diamond. In details, the fluorescence reaction of the diamond can be classified into six grades: "None", "Very Slight", "Fain Slight" "Medium", "Strong" and "Very Strong".

In one embodiment of the present invention, the diamond trading platform 100 is provided that the diamond information comprises: a picture of the diamond. Thereby, the user can know the appearance status of the diamond to be sold.

Furthermore, in the specific implementation of the diamond trading platform 100 disclosed in the present invention, each diamond to be sold in the diamond trading platform 100 must have a diamond quality report exclusive to itself (to prove the quality and the authenticity of the diamond to be sold) in order to be sold in the diamond trading platform 100. Thereby, the present invention can ensure the quality assurance and stable market price of the diamonds sold in the designated sales market.

As shown in Figs. 1 and 2, the diamond reference price calculation unit 2 is connected to the diamond information archiving unit 1, and the diamond reference price calculation unit 2 obtains reference price information in relation to the diamond information according to the basic price information and weight information of a diamond. Specifically, in an implementing sequence S2, the diamond reference price calculation unit 2 receives the basic price information from the diamond information archiving unit 1; moreover, in an implementing sequence S3, the diamond reference price calculation unit 2 calculates to obtain the reference price information.

For example, when the weight information of the diamond is 0.3 ct. (Carat), the color of the diamond is "D" and the clarity is "IF", the reference price information is equal to a value of the weight information (0.3) multiplying the basic price information ("R1"). Alternatively, when the weight information of the diamond is 0.3 ct., the color of the diamond is "F" and the clarity is "VVS1", the reference price information is equal to a value of 0.3 multiplying "R12".

In diamond trading, the sales price setting of the market supply and demand relating to the diamonds should be determined according to the objective conditions of the local sales market in different countries, so as to create the maximum sales benefit. For example, assuming that in Indonesia, the per capita monthly salary is 320 USD, the highest historical sales price of diamond in Indonesia is 3,000 USD, and only 11% of the country's population can afford to pay that highest historical sales price,, the sales figures may be dismal due to overpricing if the sales price is set to 10,000 USD for diamonds trading. Moreover, assuming that 56% of the Indonesian population can afford to pay for a quality and grade of diamond priced between 500 USD and 1,000 USD based on past sales information, it is conceivable that the largest quantity and amount of transactions in Indonesia will occur in the grade and quality of diamond priced between 500 USD and 1,000 USD, which will be the main commodity traded in the country for the above grade and quality of diamond.

As shown in Figs. 1 and 2, the market estimation price calculation unit 3 is connected to the diamond information archiving unit 1 and the diamond reference price calculation unit 2. In an implementing sequence S4, the diamond reference price calculation unit 2 sends the reference price information to the market estimation price calculation unit 3. Moreover, in an implementing sequence S5, the market estimation price calculation unit 3 obtains designated sales market maximum diamond estimation price information and designated sales market minimum diamond estimation price information according to the reference price information, the designated sales market per capita gross product income information, the designated sales market relative exchange rate information, the historical maximum sales price information and the historical minimum sales price information.

As can be seen from above, the diamond trading platform 100 of the present invention can calculate to obtain the designated sales market maximum diamond estimation price information and the designated sales market minimum diamond estimation price information according to the reference price information and according to the designated sales market per capita gross product income information, the designated sales market relative exchange rate information, the historical maximum sales price information, the historical minimum sales price information and the reference price information. In other words, the users of the diamond trading platform 100 of the present invention will be able to know: in Indonesia, the sales price should be set between 500 USD and 1,000 USD to best meet the actual local consumer market according to the grade and weight of diamonds for the local demand such that the maximum sales benefits can be obtained and the local market demand can be met.

As another example, in Switzerland, despite the small population, per capita gross production and average income are high. Although in terms of the total number of diamonds transactions, the diamonds sales performance in Swiss is far less than the total sales performance accumulated in China or United States, the diamonds historical sales prices and the diamonds transaction amount are high in Switzerland. Therefore, after the user inputs the sales information relating to the diamonds into the diamond trading platform 100 of the present invention, the user can know that in the designation of the designated sales market, Switzerland should be the first choice, followed by the United States or China and the diamonds sales distribution markets are sorted according to the diamonds grades.

As shown in Figs. 1 and 2, furthermore, in an implementing sequence S6, the market estimation price calculation unit 3 regularly and/or irregularly sends the designated sales market maximum diamond estimation price information and the designated sales market minimum diamond estimation price information to the diamond information archiving unit 1 for storage.

Specifically, in one embodiment of the diamond trading platform 100 of the present invention, the designated sales market relative exchange rate information is a purchasing power parity (PPP) exchange rate of the diamond export area to the designated sales market.

As shown in Figs. 1 to 3, in an implementing sequence S7, the market estimation price calculation unit 3 sends the designated sales market maximum diamond estimation price information and the designated sales market minimum diamond estimation price information to the distribution result display unit 4. Moreover, in an implementing sequence S8, the distribution result display unit 4 is connected to the market estimation price calculation unit 3 to display the designated sales market maximum diamond estimation price information and the designated sales market minimum diamond estimation price information regarding the designated sales market. In the embodiment disclosed in the present invention, the distribution result display unit 4 is a tablet computer operated by the user; certainly, the distribution result display unit 4 of the present invention is not limited to the above, the distribution result display unit 4 can also be a desktop computer or a smart phone.

As shown in Fig. 1 and Fig. 2, furthermore, in the diamond trading platform 100 according to one embodiment of the present invention, in a implementing sequence S9, the diamond information archiving unit 1 regularly or irregularly updates the historical maximum sales price information and the historical minimum sales price information according to the designated sales market maximum diamond estimation price information and the designated sales market minimum diamond estimation price information sent by the market estimation price calculation unit 3.

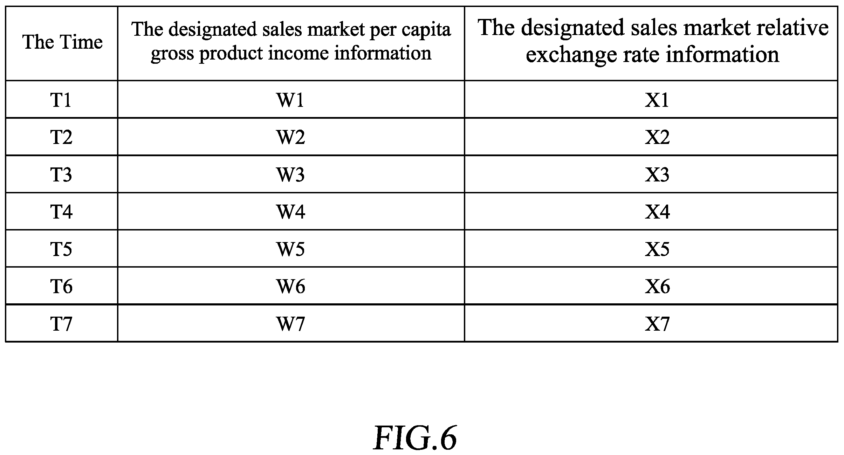

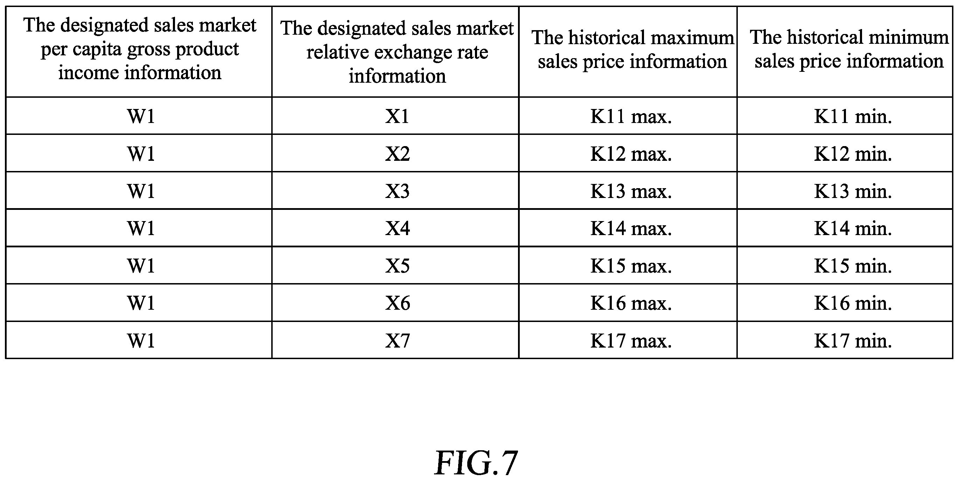

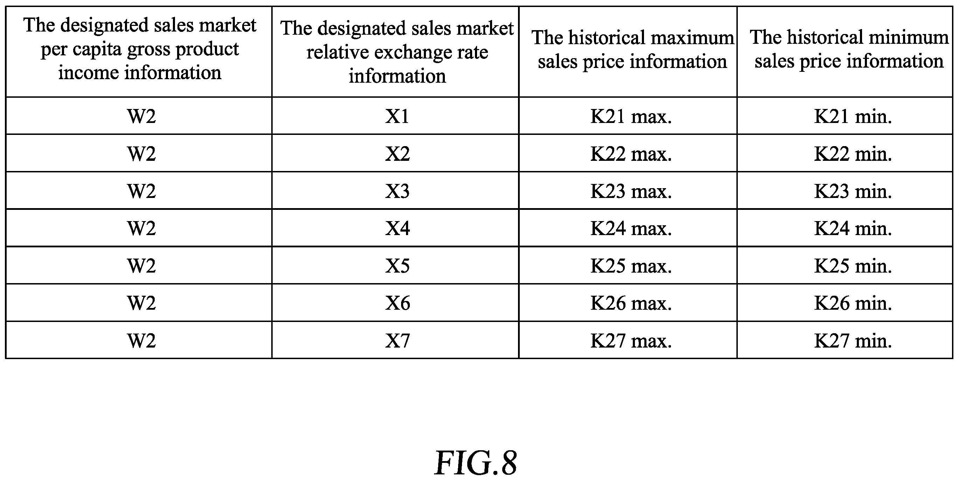

For example, with reference to Fig. 6, taking a round cut diamond with the clarity "IF" and the color "D" as an example, for this product at different time points (for instance, T1 to T7), the database 11 of the diamond information archiving unit 1 stores the designated sales market per capita gross product income information (for instance, W1 to W7) and the designated sales market relative exchange rate information (for instance, X1 to X7) of the product respectively corresponding to different time points (T1 to T7). The present invention obtains the historical maximum sales price information and the historical minimum sales price information by the following means: with reference to Fig. 7, the database 11 can correspond the designated sales market per capita gross product income information (for instance, W1) corresponding to a time point (for instance, T1) to the designated sales market relative exchange rate information corresponding to all time points (for instance, X1 to X7) and obtain a result as shown in Fig. 7. Next, the designated sales market per capita gross product income information (for instance, W2) corresponding to a next time point (for instance T2) is corresponded to the designated sales market relative exchange rate information corresponding to all time points (for instance, X1 to X7) and a result as shown in Fig. 8 is obtained. Accordingly, the designated sales market per capita gross product income information (for instance, W3, W4, W5, W6 and W7) corresponding to other time point (for instance, T3, T4, T5, T6 and T7) are respectively corresponded to the designated sales market relative exchange rate information corresponding to all time points (for instance, X1 to X7) and a plurality of results not shown in figures are obtained. As shown in Fig. 7, the designated sales market relative exchange rate information W1 corresponding to the designated sales market relative exchange rate information (X1 to X7) respectively have the historical maximum sales price information (for instance, K11 max. to K17 max.) and the historical minimum sales price information (for instance, K11 min. to K17 min.). In other words, Fig. 6 shows the seven designated sales market per capita gross product income information (W1 to W7) in seven time points (T1 to T7) and the designated sales market relative exchange rate information (X1 to X7) corresponding to the seven time points, and a total of 49 (7 × 7) permutation and combination results can be obtained by permuting and combining the information (W1 to W7 and X1 to X7). Each result of the permutations and combinations (for instance, W1 and X1, W1 and X2, W1 and X3, W1 and X4, W1 and X5, W1 and X6, W1 and X7, W2 and X1, W2 and X2, W2 and X3, W2 and X4, W2 and X5, W2 and X6, W2 and X7, ... W7 and X2, W7 and X3, W7 and X4, W7 and X5, W7 and X6, W7 and X7) is used to obtain the historical maximum sales price information and the historical minimum sales price information corresponding to each result of the permutations and combinations. Taking Fig. 7 as an example, the historical maximum sales price information (K11 max.) and the historical minimum sales price information (K11 min.) can be obtained using the permutation and combination result of W1 and X1; the historical maximum sales price information (K12 max.) and the historical minimum sales price information (K12 min.) can be obtained using the permutation and combination result of W1 and X2; the historical maximum sales price information (K13 max.) and the historical minimum sales price information (K13 min.) can be obtained using the permutation and combination result of W1 and X3; the historical maximum sales price information (K14 max.) and the historical minimum sales price information (K14 min.) can be obtained using the permutation and combination result of W1 and X4; the historical maximum sales price information (K15 max.) and the historical minimum sales price information (K15 min.) can be obtained using the permutation and combination result of W1 and X5; the historical maximum sales price information (K16 max.) and the historical minimum sales price information (K16 min.) can be obtained using the permutation and combination result of W1 and X6; and the historical maximum sales price information (K17 max.) and the historical minimum sales price information (K17 min.) can be obtained using the permutation and combination result of W1 and X7. Furthermore, taking Fig. 8 as an example, the historical maximum sales price information (K21 max.) and the historical minimum sales price information (K21 min.) can be obtained using the permutation and combination result of W2 and X1; the historical maximum sales price information (K22 max.) and the historical minimum sales price information (K22 min.) can be obtained using the permutation and combination result of W2 and X2; the historical maximum sales price information (K23 max.) and the historical minimum sales price information (K23 min.) can be obtained using the permutation and combination result of W2 and X3; the historical maximum sales price information (K24 max.) and the historical minimum sales price information (K24 min.) can be obtained using the permutation and combination result of W2 and X4; the historical maximum sales price information (K25 max.) and the historical minimum sales price information (K25 min.) can be obtained using the permutation and combination result of W2 and X5; the historical maximum sales price information (K26 max.) and the historical minimum sales price information (K26 min.) can be obtained using the permutation and combination result of W2 and X6; and the historical maximum sales price information (K27 max.) and the historical minimum sales price information (K27 min.) can be obtained using the permutation and combination result of W2 and X7. By the means mentioned above, row data that is closest to the designated sales market per capita gross product income information (the W value) and the designated sales market relative exchange rate information (the X value) at the same time is used as a searching result, the historical maximum sales price information and the historical minimum sales price information of the row data are used as the historical maximum sales price information and the historical minimum sales price information. For example, the W2 and the X6 are searched out to be closest to the designated sales market per capita gross product income information (the W value) and the designated sales market relative exchange rate information (the X value), so K26 max. and K26 min. are respectively the historical maximum sales price information and the historical minimum sales price information. The present invention is not limited to this, the row data obtained can also be determined by a weighted method; for example, a difference value d1 which is relative to the designated sales market per capita gross product income information (the W value) is given a weighting value p, a difference value d2 which is relative to the designated sales market relative exchange rate information (the X value) is given a weighting value q, and the value of d1 multiplied by the weighting value p is added to the value of d2 multiplied by the weighting value q to obtain the value of "d1×p+d2×q". In this way, the row data in a W1 table (Fig. 7), a W2 table (Fig. 8), ..., a W7 table (not shown in figures) are calculated to obtain the row data having the minimum value, and the historical maximum sales price information and the historical minimum sales price information in the row data are used as the historical maximum sales price information and the historical minimum sales price information obtained.

As mentioned above, the present invention uses the factors such as the spending power of the consumers of the diamonds selling areas, the exchange rate and the historical sales records as important references for the diamonds selling such that the sales amount can be increased and the transaction risk can be decreased to avoid the diamonds draggy sales and avoid the unnecessary diamonds transportation and storage cost. Specifically, the diamond trading platform 100 of the present invention sets a reasonable diamonds sales price according to the diamonds quality, number and average estimated price, the diamonds reference price information, the designated sales market per capita gross product income information, the designated sales market relative exchange rate information, the historical maximum sales price information and the historical minimum sales price information. Moreover, the diamond trading platform 100 utilizes the distribution result display unit 4 to display the designated sales market maximum diamond estimation price information and the designated sales market minimum diamond estimation price information regarding the designated sales market such that a suggestion relating to the designated sales market and the reasonable diamonds sales price can be provided to the diamonds seller.

## Claims

1. A diamond trading platform (100), **characterized in that** the diamond trading platform (100) comprises:
a diamond information archiving unit (1) having a database (11), the database (11) storing diamond information, basic price information regarding diamond in different grades and qualities, designated sales market information regarding a designated sales market, designated sales market per capita gross product income information in relation to the designated sales market information, designated sales market relative exchange rate information, and historical maximum sales price information and historical minimum sales price information in the designated sales market in relation to each diamond information, wherein the designated sales market relative exchange rate information is a relative exchange rate of a diamond export area to the designated sales market;
a diamond reference price calculation unit (2) connected to the diamond information archiving unit (1), wherein the diamond reference price calculation unit (2) obtains reference price information in relation to the diamond information according to the basic price information and weight information of a diamond;
a market estimation price calculation unit (3) connected to the diamond information archiving unit (1) and the diamond reference price calculation unit (2), wherein the market estimation price calculation unit (3) obtains designated sales market maximum diamond estimation price information and designated sales market minimum diamond estimation price information according to the reference price information, the designated sales market per capita gross product income information, the designated sales market relative exchange rate information, the historical maximum sales price information and the historical minimum sales price information, and the market estimation price calculation unit (3) regularly and/or irregularly sending the designated sales market maximum diamond estimation price information and the designated sales market minimum diamond estimation price information to the diamond information archiving unit (1) to store; and
a distribution result display unit (4) connected to the market estimation price calculation unit (3) to display the designated sales market maximum diamond estimation price information and the designated sales market minimum diamond estimation price information regarding the designated sales market.

2. The diamond trading platform (100) as claimed in claim 1, wherein the diamond information archiving unit (1) regularly or irregularly updates the historical maximum sales price information and the historical minimum sales price information according to the designated sales market maximum diamond estimation price information and the designated sales market minimum diamond estimation price information sent by the market estimation price calculation unit (3).

3. The diamond trading platform (100) as claimed in claim 1, wherein the diamond trading platform (100) is aimed to physics unique properties of diamonds, the designated sales market relative exchange rate information is a purchasing power parity exchange rate of the diamond export area to the designated sales market.

4. The diamond trading platform (100) as claimed in claim 1, wherein the diamond trading platform (100) is aimed to physics unique properties of diamonds, the diamond information comprises: a color and a clarity of the diamond, the basic price information regarding the color and the clarity of the diamond.

5. The diamond trading platform (100) as claimed in claim 1, wherein the diamond trading platform (100) is aimed to physics unique properties of diamonds, the diamond information comprises: a color tone of the diamond matching color shades, the basic price information regarding the color and the color tone of the diamond.

6. The diamond trading platform (100) as claimed in claim 1, wherein the diamond trading platform (100) is aimed to physics unique properties of diamonds, the diamond information comprises: a cutting form, the cutting form being round or fancy.

7. The diamond trading platform (100) as claimed in claim 1, wherein the diamond trading platform (100) is aimed to physics unique properties of diamonds, the diamond information comprises: a polishing degree of the diamond.

8. The diamond trading platform (100) as claimed in claim 1, wherein the diamond trading platform (100) is aimed to physics unique properties of diamonds, the diamond information comprises: a degree of symmetry of the diamond.

9. The diamond trading platform (100) as claimed in claim 1, wherein the diamond trading platform (100) is aimed to physics unique properties of diamonds, the diamond information comprises: a culet situation of the diamond.

10. The diamond trading platform (100) as claimed in claim 1, wherein the diamond trading platform (100) is aimed to physics unique properties of diamonds, the diamond information comprises: a fluorescence reaction of the diamond.

11. The diamond trading platform (100) as claimed in claim 1, wherein the diamond trading platform (100) is aimed to physics unique properties of diamonds, the diamond information comprises: a color degree category of the diamond and a picture of the diamond.

12. The diamond trading platform (100) as claimed in claim 1, wherein the diamond information comprises: information, which could facilitate the customer to obtain maximizing transactions and minimizing losses, in countries including a presently existing country having sovereignty and a record of diamond trade and a country belonging to a member of Kimberley process such that a customer uses the diamond information to input a region of a country desired for diamond trade.
